# EUROPEAN PATENT APPLICATION

(11) **EP 3 926 535 A1**
(43) Date of publication of application: **22.12.2021**
(21) Application number: 20180583.5
(22) Date of filing: 17.06.2020
(51) Int. Cl.: G06K 9/32, G06K 9/62

(54) **METHODS FOR AUTOMATIC NUMBER PLATE RECOGNITION SYSTEMS**

(71) Applicant: JENOPTIK Traffic Solutions UK Ltd, Camberley, Surrey GU15 3YL (GB)
(72) Inventor: Richards, Tim, Reading, RG6 7YD (GB)
(74) Representative: Waldauf, Alexander

(57) **Abstract**

A method for automatic performance measurement of an automatic number plate recognition system is provided. The automatic number plate recognition system is to capture a plurality of images in which vehicle number plates are visible and use an algorithm to recognise one or more symbols of the vehicle number plates, the algorithm to output the one or more recognised symbols and a confidence value of the algorithm in recognising the one or more symbols. The method comprises: determining probabilities of the one or more symbols of the number plates visible in the image being correctly recognised based on the confidence values associated with the respective symbols; and determining an accuracy of the automatic number plate recognition system based on the probabilities of the one or more characters of the plurality of images having been correctly identified.

## Description

### Technical Field

The present disclosure relates to a method for an automatic number plate recognition system and is particularly, although not exclusively, concerned with a method for an automatic number plate recognition system for monitoring the accuracy of the automatic number recognition system in recognising vehicle number plates.

### Background

Automatic Number Plate Recognition (ANPR) systems are frequently used by highways authorities, governments and law enforcement agencies for detecting and identifying vehicles travelling along roads covered by the systems.

The systems typically comprise one or more cameras for capturing images of the vehicles travelling along the roads and a controller for processing the images to automatically detect the presence of vehicle number plates visible in the images, and for automatically recognising symbols of the number plate to thereby identify the vehicle. For example, the controller may implement an algorithm, such as a machine learning algorithm, to process the images to automatically recognise the symbols of number plates visible in the images.

It is often desirable to determine the accuracy with which the ANPR system is able to correctly recognise the symbols in a number plate visible in the captured images.

In document EP3286693 A1 it is noted that an operator, e.g. of a tolling system, may not take action to send a ticket or fine to a violator or otherwise allow a pre-paid customer through a tolling area, unless a licence plate has been read with a high degree of confidence. This is addressed in document EP3286693 A1 by providing a method of improving the accuracy of an optical character recognition method. In particular, a method is proposed in which the accuracy of an optical character recognition system is improved by combining the results of more than one different character recognition engine to determine a result which can be associated with a higher confidence value.

Some authorities utilising an ANPR system may require that the accuracy of the ANPR system is monitored to ensure that the accuracy of the system does not drop below a desirable accuracy.

The process of determining the accuracy with which the system is operating can be very time consuming, requiring that a human operator of the system review the images captured by the system to verify whether the symbols in the number plate have been identified correctly.

It is desirable to provide a system and method for determining the accuracy of an ANPR system, which reduces the time taken and enables the effort required from a human operator of the system to be reduced.

### Statements of Invention

According to an aspect of the present disclosure, there is provided a method for an automatic number plate recognition system, e.g. for automatic performance measurement of an automatic number plate recognition system, the automatic number plate recognition system to capture a plurality of images in which vehicle number plates are visible and use an algorithm to recognise one or more symbols of the vehicle number plates, the algorithm to output the one or more recognised symbols and a confidence value of the algorithm in recognising the one or more symbols, wherein the method comprises:
determining probabilities of the one or more symbols of the number plates visible in the images, e.g. of each of the number plates visible in the respective images, being correctly recognised based on the confidence values associated with the symbols; and
determining an accuracy of the automatic number plate recognition system based on the probabilities of the one or more characters of the plurality of images having been correctly identified.

One or more symbols may be output for each of the number plates within the images read in by the automatic number plate recognition system. A confidence value may be output for each of the number plates within the images read in by the automatic number plate recognition system. The confidence value may be associated with the number plate, e.g. with one, more than one or each of the symbols of the number plate.

The accuracy of the automatic number plate recognition system may be a percentage of number plates which have been correctly recognised by the automatic number plate recognition system, e.g. for which one, more than one or each of the symbols have been correctly recognised, based on a particular set of images read in by the automatic number plate recognition system.

The probability may be determined based on the one or more symbols with which the confidence value is associated.

The accuracy of the automatic number plate recognition system may be determined based on confidence values determined during a first time period and/or determined in respect of image captures during the first time period.

The method may comprise generating an alert if the accuracy of the automatic number plate recognition system is below a first predetermined threshold accuracy.

The method may comprise determining the accuracy of the automatic number plate recognition system based on confidence values determined within a second time period and/or determined in respect of image captures during the second time period. The method may further comprise determining a change in accuracy of the automatic number plate recognition system between the first and second time periods. The method may further comprise generating an alert if a change in accuracy of the automatic number plate recognition system between the first and second time periods is greater than a first threshold difference.

The method may comprise scheduling a maintenance operation to be performed on the automatic number plate recognition system, e.g. if an accuracy of the automatic number plate recognition system is below a second predetermined threshold accuracy and/or change in accuracy of the automatic number plate recognition system between the first and second time periods is greater than a second threshold difference.

Determining the probability of the one or more symbols of a number plate being correctly recognised may comprise referring the confidence value to a look up table; or calculating the probability using a function relating confidence value of the algorithm to the probability of the symbols being correctly recognised. Additionally or alternatively, determining the probability of the one or more symbols of a number plate being correctly recognised may comprise providing the confidence value, and optionally the identified symbols, as an input to a machine learning model, the machine learning model trained to output a probability of the one or more characters of the plurality of images having been correctly recognised by the algorithm based on the input confidence value, and optionally based on the identified symbols.

According to another aspect of the present disclosure, there is provided a system for an automatic number plate recognition system, the automatic number plate recognition system to capture a plurality of images in which vehicle number plates are visible and apply an algorithm for recognising one or more symbols of the vehicle number plates, the algorithm to output the one or more recognised symbols and a confidence value of the algorithm in recognising the one or more symbols, wherein the system comprises a controller configured to:
receive the confidence values output by the automatic number plate recognition system;
determine probabilities of the one or more symbols of the number plates visible in the image being correctly recognised based on the confidence values; and
determine an accuracy of the automatic number plate recognition system based on the probabilities of the one or more symbols of the plurality of number plate having been correctly recognised.

The controller may be configured to perform any of the above-mentioned methods.

The system may comprise the automatic number plate recognition system. The system may comprise a memory storing a look up table relating confidence values to probabilities of the one or more symbols being correctly recognised.

The system may comprise a memory storing a machine learning model trained to output a probability of the one or more symbols of the plurality of number plates having been correctly recognised by the algorithm based on an input confidence value, and optionally one or more recognised symbols associated with the confidence value. The controller may be configured to determine the probabilities of the one or more symbols of the number plates visible in the images being correctly recognised by providing the confidence values, and optionally the one or more identified symbols, as inputs to the machine learning model.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention. In particular, the features described in relation to the first-mentioned aspect may be combined with the features of the second-mentioned aspect.

### Brief Description of the Drawings

For a better understanding of the present invention, and to show more clearly how it may be carried into effect, reference will now be made, by way of example, to the accompanying drawings, in which:
Figure 1 is a schematic view of a system according to arrangements of the present disclosure;
Figure 2 is a schematic view of an AN PR controller depicted in Figure 1;
Figure 3 is a flow chart illustrating an accuracy determination method according to the present disclosure; and
Figure 4 is a flow chart illustrating an accuracy monitoring method according to the present disclosure.

### Detailed Description

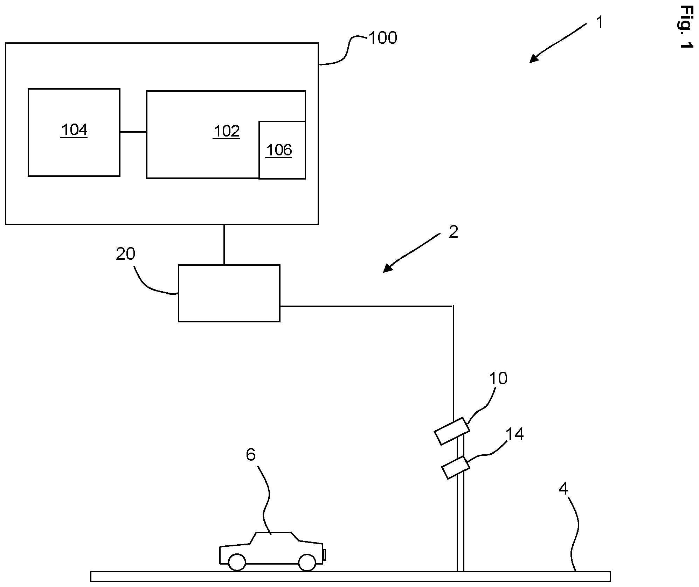

With reference to Figure 1, a system 1, accordingly to arrangements of the present disclosure, may comprise an Automatic Number Plate Recognition (ANPR) system 2 for detecting and identifying vehicles 6 travelling along a road 4, and an accuracy determining controller 100 for determining an accuracy of the ANPR system 2.

The ANPR system 2 comprises a camera 10 arranged to capture images of the vehicles 6 travelling along the road 4. In the arrangement shown in Figure 1, the ANPR system 2 comprises a single camera 10. However, in other arrangements, the ANPR system 2 may comprise any desirable number of cameras, e.g. positioned and/or configured to capture images of vehicles travelling in different lanes of the road, in different directions and/or at different locations along the road or along other road.

The ANPR system 2 may further comprise one or more lights 14 for illuminating the vehicles 6 in order to improve the quality of images captured by the camera 10. In the arrangement shown in Figure 1, a single light 14 is shown mounted on the same utility pole used to mount the camera 10. However, in other arrangements, any number and arrangement of lights may be provided in order to adequately illuminate images captured by the camera 10 and/or any other cameras provided in the ANPR system 2.

The ANPR system 2 further comprises an ANPR controller 20 comprising one or more modules configured to recognise vehicle number plates visible within the images captured by the camera 10.

The term "recognise a vehicle number plate" is used within this specification to mean to determine one, more than one or each of the symbols, e.g. characters (letters) and/or digits (numbers), within a number plate (licence plate) of the vehicle, displayed in one or more rows. Similarly, the term "recognise a symbol" is used to mean to determine a symbol of number plate. The term "identity of a vehicle" is used to mean the symbols of the vehicle number plate that have been recognised. References to the symbol or number plate being "correctly" recognised mean that the recognised symbol(s) or number plate correctly match the symbol(s) or number plate visible in the image.

The ANPR controller 20 may be provided at the roadside. For example, the ANPR controller 20 may be provided in the same housing together with the camera 10 and/or may be mounted on the same utility pole, structure or gantry as the camera. Alternatively, as depicted in Figure 1, the ANPR controller 20 may be located remotely from the roadside, e.g. in a remote data centre, and may be configured to receive information from the camera 10 via a wired or wireless connection, e.g. a network connection.

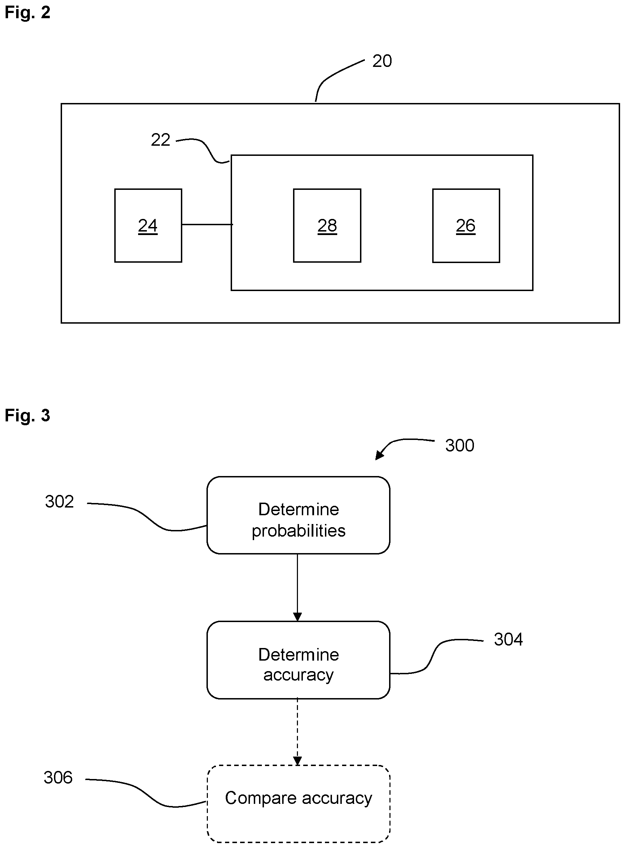

With reference to Figure 2, the ANPR controller 20 may comprise a memory 22, e.g. a computer-readable storage medium, such as a non-transitory computer-readable storage medium, and a processor 24 operatively connected to the memory 22. The memory 22 may be storing instructions defining an algorithm 26 for processing an image, e.g. captured by the camera 10, in order to recognising one, more than one or each of the symbols of a number plate visible within the image.

In some arrangements, the memory 22 may be storing one or more parameters defining a machine learning model, such as a Convolutional Neural Network (CNN), configured for recognising vehicle number plates within the images captured by the camera. For example, the memory 22 may be storing a plurality of weights, e.g. defining one or more kernels, and/or biases corresponding to nodes and/or connections between nodes forming the CNN. The weights and/or biases may be stored within one or more data structures defining an architecture of the CNN.

The memory 22 may further store computer-readable instructions 28 which, when executed by a processor, such as the processor 24, cause the processor to process an image using the algorithm 26. For example, the instructions may cause the processor to feed or propagate an input forwards through the machine learning model and determine an output, e.g. a classification, from the machine learning model corresponding to the input. The input may comprise the image captured by the camera 10, e.g. a matrix comprising values representing the pixels of the image. The output may comprise one or more symbols of a vehicle number plate visible in the image.

The algorithm 26 is configured to output one or more confidence values. The confidence values may correspond to the confidence with which the algorithm has recognised the symbols of the number plate visible within the image. In some arrangements, the algorithm 26 may output confidence values respectively corresponding to each of the symbols. In other arrangements, the algorithm 26 may output a (single) confidence value corresponding to the one or more symbols of the number plate, e.g. representing an overall confidence of the algorithm in recognising all of the symbols within a particular number plate.

The confidence values output by the algorithm 26 may be representative of the probability that a particular symbol or number plate has been correctly recognised by the ANPR system 2. For example, a symbol or number plate associated with a greater confidence value may be more likely to have been correctly recognised than a symbol or number plate associated with a lower confidence value. However, the probability of the symbol or number plate having been correctly recognised may vary non-linearly with the confidence value. For example, there may be a logarithmic relationship between confidence value and probability. Furthermore, the relationship between the confidence value and the probability of the symbol or number plate having been correctly recognised may vary depending on the algorithm used and/or, in the case of machine learning algorithms, the manner in which the algorithm was trained. For example, for one algorithm a confidence value of 0.9 may correspond to a probability of 90% and a confidence value of 0.95 may correspond to a probability of 99.9% and for another algorithm a confidence value of 0.9 may correspond to a probability of 95% and a confidence value of 0.95 may correspond to a probability of 99.999%.

In some arrangements, the algorithm 26 may be capable of recognising one or more particular symbols more easily than it is able to recognise one or more other symbols. For example, the algorithm may be more easily able to recognise a letter 'V' compared to a letter 'B', which may be easily confused with the number '8'.

In this case, there may be a different relationship between the confidence value and the probability of a symbol or number plate having been correctly recognised depending on the particular symbol or symbols that the confidence value is associated with. In other words, the relationship between the confidence value and the probability may vary depending on the symbol that has been recognised or the symbols within the number plate that has been recognised.

In other arrangements, the relationship between the confidence value and the probability of the associated symbol or number plate having been correctly recognised may be independent of the particular symbol or symbols associated with the confidence value.

A relationship between confidence value and probability of a symbol or number plate having been correctly recognised may be determined, e.g. empirically, for a particular algorithm using the confidence values output by the algorithm and information specifying whether the outputs from the algorithm were correct. Optionally, the plurality of outputs from the algorithm, corresponding it the confidence values, may additionally be used to determine the relationship. For example, the information specifying whether the outputs from the algorithm were correct may be used to calculate a percentage of the number of times that a particular confidence value was associated with a symbol that was correctly recognised. This percentage may be taken to be the probability that outputs associated with the particular confidence value have been recognised correctly. The relationship between confidence value and probability may be defined as a function relating confidence values to corresponding probability values, or by a look-up table relating the confidence values to the corresponding probability values.

Returning to Figure 1, the accuracy determining controller 100 may comprise a memory 102, e.g. a computer-readable storage medium, such as a non-transitory computer-readable storage medium, and a processor 104 operatively connected to the memory 102. The memory 102 may store computer-readable instructions which, when executed by the processor 104, cause the processor to determine an accuracy of the ANPR system 2 in recognising the number plates within the images captured by the camera 10.

The accuracy of the ANPR system 2 may be defined as the proportion of vehicles travelling along the road covered by the ANPR system and have their image captured by the camera 10, that the ANPR system 2 has correctly recognise the identity of. The accuracy may be expressed, for example, as a percentage.

With reference to Figure 3, the accuracy determining controller 100 may be configured to perform an accuracy determination method 300, according to arrangements of the present disclosure. The accuracy determination method 300 comprises a first block 302, at which probabilities are determined of the one or more symbols of the number plates visible in images having been correctly recognised.

The probabilities are determined at the first block 302 based on the confidence values associated with the respective symbols. In arrangements in which the relationship between the confidence value and the probability depends on the particular symbol or symbols that have been recognised, the probability may be determined, at the first block 302, based on the confidence value and the recognised symbol or symbols associated with the confidence value.

As described above, in one or more arrangements, the confidence values correspond to a confidence of the algorithm in recognising the one or more symbols of the number plate visible in a particular image, e.g. all of the symbols of the number plate visible in the particular image. In such arrangements, the first block 302 may comprise calculating, based on the confidence values, the respective probabilities that the one or more symbols of the number plates corresponding to those confidence values have been correctly recognised. The probabilities may be calculated using a function relating the confidence value to the probability.

In other arrangements, the confidence values output by the algorithm may correspond to the confidence of the algorithm in recognising particular symbols of the recognised number plates. In such arrangements, a symbol probability may be calculated in respect of each of the individual symbols, and the symbol probabilities corresponding to the one or more symbols may be combined, e.g. multiplied together, in order to determine the probability of the number plate comprising those symbols having been correctly recognised.

In some arrangements, the memory 102 may store a look up table 106 relating confidence values of symbols and/or number plates to probabilities of the symbols or number plates having been correctly recognised. At the first block 302, the method 300 may comprise determining the probability of a number plate or one or more symbols of the number plate having been correctly recognised by referring one or more confidence values to the look up table.

As described above, a relationship between confidence values and probabilities for a particular algorithm may be determined to define a function or look-up table relating the confidence values to the corresponding probability values. In other arrangements, the confidence values associated with outputs from the algorithm and/or information specifying whether the outputs from the algorithm corresponding to those confidence values were correct may be used for training a machine learning model, such as an artificial neural network, to output a probability value based on an input confidence value. Optionally, the plurality of outputs from the algorithm may additionally be used to train the machine learning model, e.g. if the relationship between confidence value and probability may depend on the particular symbol being recognised.

In such arrangements, the first block 302 may comprise proving the confidence value or values relating to a number plate to a machine learning model to output a probability value. In some arrangements, the symbol or symbols output by the algorithm may additionally be input to the machine learning model.

The method 300 comprises a second block 304 at which an accuracy of the ANPR system 2 in correctly recognising number plates is determined. The accuracy may comprise a rate at which the ANPR system 2 has correctly recognised number plate. For example, an accuracy of 95% may mean that the ANPR system 2 has correctly recognised 95% of the number plates visible in the images.

The accuracy of the ANPR system 2 may be determined by calculating an average probability of the ANPR system having correctly recognised one or more number plates. For example, the second block 304 may comprise calculating an average of the probabilities determined at the first block 302.

In some arrangements, the second block 304 may comprise comparing the probabilities determined at the first block 302 with a threshold probability, such as 99%. For probabilities that are greater than or equal to the threshold probability, it may be determined that the number plate corresponding to that probability has been correctly recognised. Conversely, for probabilities that are less than the threshold probability, it may be determined that the number plate corresponding to that probability has not been correctly recognised. The accuracy of the algorithm may be determined by calculating a percentage of the number plates that have be determined to have been correctly recognised.

Additionally or alternatively, the accuracy of the ANPR system 2 may comprise a probability of the percentage of number plates having being correctly recognised by the ANPR system being equal to or greater than a predetermined percentage, such as 90%, 95% or 98%. The second block 304 may comprise determining, e.g. based on the probabilities determined at the first block 302, the probability of the percentage of number plate being correctly recognised by the algorithm being above the predetermined percentage.

In some arrangements, the second block 304 may comprise calculating probabilities that the percentage of number plate that have been correctly recognised by the ANPR system 2 is greater than or equal to a plurality of predetermined percentages. For example, the second block 304 may comprise determining the probabilities of the percentage of correctly recognised number plates being 90% or greater, 95% or greater, 98% or greater or any other percentage.

The method 300 may optionally comprise a third block 306, at which the accuracy of the ANPR system 2 is compared to one or more predetermined threshold accuracies. If the accuracy of the ANPR system is less than a first predetermined threshold accuracy an alert may be generated. Additionally or alternatively, if the accuracy of the ANPR system is less than a second predetermined threshold accuracy, a maintenance operation of the ANPR system may be scheduled. For example, a task may be added to a schedule of a maintenance technician to clean, inspect and/or replace components of the ANPR system 2, such as the camera 10 and/or lights 14, or otherwise determine whether the condition of the components of the ANPR system may be affecting the accuracy.

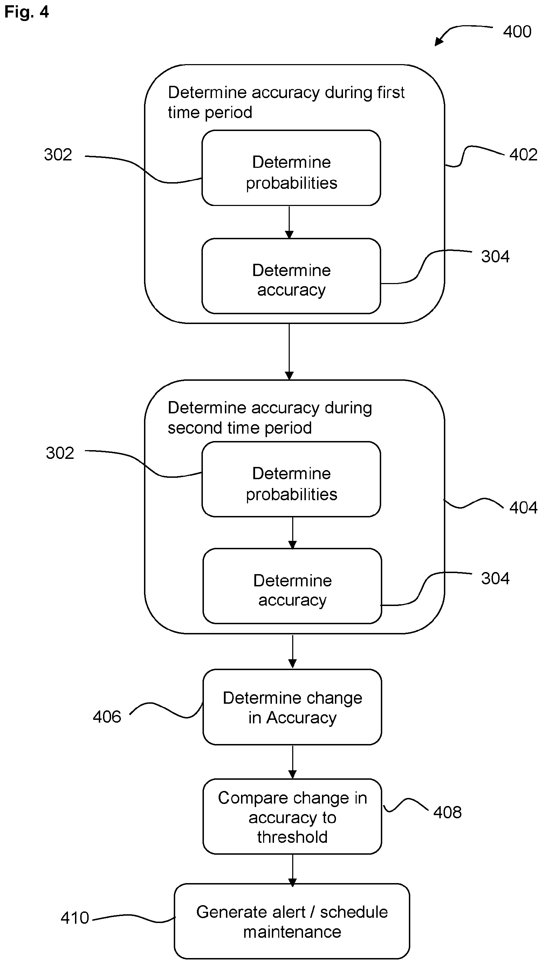

With reference to Figure 4, an accuracy monitoring method 400, according to the present disclosure, will now be described. The method 400 may comprise the accuracy determination method 300 described above. The method 400 may be performed in order to determine, or monitor, a change in accuracy of the ANPR system 2 over time.

The method 400 comprises a first block 402, at which an accuracy of the ANPR system 2 within a first time period is determined. As shown in Figure 4, the first block 402 may comprise the first and second blocks 302, 304 of the method 300 as described above. At the first block 402, the accuracy of the ANPR system 2 may be determined in respect of confidence values determined within the first time period and/or in respect of confidence values determined by processing images that were captured within the first time period. For example, the first time period may be a period of 2 hours, 24 hours, or 2, 3, 4, 5, 6, or 7 days.

The method 400 may further comprise a second block 404, at which an accuracy of the ANPR system 2 within a second time period is determined. The second block 404 may similarly comprise the first and second blocks 302, 304 of the accuracy determination method 300 as described above. At the second block 404, the accuracy of the ANPR system 2 may be determined in respect of confidence values determined within the second time period and/or in respect of confidence values determined by processing images captured within the second time period. In other words, the second block 404 may comprise repeating the first and second blocks 302, 304 of the method 300 using confidence values determined within the second time period and/or in respect of confidence values determined by processing images captured within the second time period. The second time period may be the same length as the first time period or may be a different length. The second time period may be at least partially subsequent to the first time period.

The method 400 may comprise a third block 406, at which a change in accuracy of the ANPR system 2 between the first and second time periods is determined. For example, the accuracy of the ANPR system determined at the second block 404 may be subtracted from the accuracy of the algorithm determine at the first block 402, or vice versa.

The method may further comprise a fourth block 408, at which the change in accuracy of the algorithm is compared to one or more threshold differences. If, at the fourth block 408, the change in accuracy is greater than one or more of the threshold differences, such as a first threshold difference, the method 400 may proceed to a fifth block 410, at which an alert is generated indicating that the accuracy of the algorithm 26 has reduced by an amount greater than one or more of the threshold differences. For example, the alert may be generated if it is determined that the charge in accuracy is greater than the first threshold difference.

In some arrangements, a memory buffer of the ANPR system 2 may be configured to store confidence values determined during a previous time period, e.g. extending up to a current time, and/or in respect of images captures during the previous time period. For example, the ANPR system 2 may comprise a memory buffer configured to store the confidence values relating to number plate that have been recognised in the last 2 hours, 24 hours or any other desirable period. Additionally or alternatively, a memory buffer of the system 1 may be configured to store probability values corresponding to confidence values determined during the previous time period and/or in respect of images captures during the previous time period. The memory buffer of the ANPR system 2 and/or the system 1 may be continuously updated.

The stored confidence values or probability values may then be used to determine a current accuracy of the ANPR system 2, e.g. during the previous time period. For example, blocks of the methods 300, 400 described above may be performed by using the confidence values or probability values stored in the memory buffer. For example, the first and/or second block 302, 304 of the method 300 may be performed using the confidence values or probability values stored in the memory buffer. The first and/or second block 302, 304 of the method 300 may be repeated, e.g. at regular predetermined intervals, in order to determine an updated accuracy of the ANPR system 2.

In some arrangements, the second block 404 of the method 400 may be performed based on the confidence values stored in the memory buffer. The second block 404 and the third block 406 may be repeated with a predetermined interval, in order to monitor how the accuracy of the ANPR system is changing relative to the accuracy determined at the first block. In some arrangements, the fourth and fifth blocks 408, 410 of the method 400 may be repeated.

There may be a number of reasons that the accuracy of the ANPR system 2 may change over time. For example, a lens of the camera 10 may have become dirty, which may reduce a quality of images captured by the camera 10. A light for illuminating the vehicles for the camera may have failed or become dirty, which may similarly reduce the quality of the images captures by the camera 10. Alternatively, an environmental condition, such as inclement weather, may have affected the ability of the ANPR system 2 to accurately recognise vehicle number plates during a particular time period. By monitoring changes in the accuracy of the algorithm between different time periods, the method 400 may enable an authority operating the ANPR system 2 to schedule maintenance to be performed on the ANPR system 2 at appropriate times when the condition of the ANPR system 2 may be affecting its accuracy.

In some arrangements, at the fifth block 410, a maintenance operation of the ANPR system may be scheduled. For example, a task may be added to a schedule of a maintenance technician to clean, inspect and/or replace components of the ANPR system 2, such as the camera 10 and/or light 14, or otherwise determine whether the condition of the components of the ANPR system may be affecting the accuracy. For example, the maintenance operation of the ANPR system may be scheduled if it is determined that the change is accuracy is greater than a second threshold difference.

In some arrangements, the method 400 may comprise performing the maintenance operation, such as cleaning, inspecting and/or replacing components of the ANPR system 2, e.g. in order to improve the quality of images captured by the camera 10 and/or otherwise improve the accuracy of the ANPR system 2 in recognising vehicles.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A method for an automatic number plate recognition system, the automatic number plate recognition system to capture a plurality of images in which vehicle number plates are visible and use an algorithm to recognise one or more symbols of the vehicle number plates, the algorithm to output the one or more recognised symbols and a confidence value of the algorithm in recognising the one or more symbols, wherein the method comprises:
determining probabilities of the one or more symbols of the number plates visible in the images being correctly recognised based on the confidence values associated with the symbols; and
determining an accuracy of the automatic number plate recognition system based on the probabilities of the one or more characters of the plurality of images having been correctly identified.

2. The method of claim 1, wherein the method further comprises generating an alert if the accuracy of the automatic number plate recognition system is below a first predetermined threshold accuracy.

3. The method of claim 1 or 2, wherein the method further comprises scheduling a maintenance operation to be performed on the automatic number plate recognition system if an accuracy of the automatic number plate recognition system is below a second predetermined threshold accuracy.

4. The method of any of the preceding claims, wherein the accuracy of the automatic number plate recognition system is determined based on confidence values determined during a first time period and/or determined in respect of image captured during the first time period.

5. The method of claim 4, wherein the method further comprises:
determining the accuracy of the automatic number plate recognition system based on confidence values determined within a second time period and/or determined in respect of image captures during the second time period; and
determining a change in accuracy of the automatic number plate recognition system between the first and second time periods.

6. The method of claim 5, wherein the method further comprises:
generating an alert if a change in accuracy of the automatic number plate recognition system between the first and second time periods is greater than a first threshold difference.

7. The method of claim 5 or 6, wherein the method further comprises scheduling a maintenance operation to be performed on the automatic number plate recognition system if a change in accuracy of the automatic number plate recognition system between the first and second time periods is greater than a second threshold difference.

8. The method of any of the preceding claims, wherein determining a probability of the one or more symbols of a number plate being correctly recognised comprises:
referring the confidence value to a look up table; or
calculating the probability using a function relating confidence value of the algorithm to the probability of the symbols being correctly identified.

9. The method of any of the preceding claims, wherein determining a probability of the one or more symbols of a number plate being correctly recognised comprises providing the confidence value as an input to a machine learning model, the machine learning model trained to output a probability of the one or more characters of the plurality of images having been correctly identified by the algorithm based on the input confidence value.

10. A system for an automatic number plate recognition system, the automatic number plate recognition system to capture a plurality of images in which vehicle number plates are visible and apply an algorithm for recognising one or more symbols of the vehicle number plates, the algorithm to output the one or more recognised symbols and a confidence value of the algorithm in recognising the one or more symbols, wherein the system comprises a controller configured to:
receive the confidence values output by the automatic number plate recognition system;
determine probabilities of the one or more symbols of the number plates visible in the image being correctly recognised based on the confidence values; and
determine an accuracy of the automatic number plate recognition system based on the probabilities of the one or more symbols of the plurality of number plates having been correctly recognised.

11. The system of claim 10, wherein the controller is configured to perform the method of any of claims 2 to 9.

12. The system of claim 10 or 11 further comprising the automatic number plate recognition system.

13. The system of any of claims 10 to 12, wherein the system comprises a memory storing a look up table relating confidence values to probabilities of the one or more symbols being correctly recognised.

14. The system of any of claims 10 to 13, wherein the system comprises a memory storing a machine learning model trained to output a probability of the one or more symbols of the plurality of number plates having been correctly identified by the algorithm based on an input confidence value, wherein the controller is configured to determine the probabilities of the one or more symbols of the number plates visible in the image being correctly recognised by providing the confidence values as inputs to the machine learning model.
